# EUROPEAN PATENT APPLICATION

(11) **EP 3 290 272 A1**
(43) Date of publication of application: **07.03.2018**
(21) Application number: 16786006.3
(22) Date of filing: 22.03.2016
(51) Int. Cl.: B60R 9/042

(54) **DEVICE FOR TRANSPORTING BICYCLES OR SIMILAR**

(30) Priority: 30.04.2015 ES 201530587
(71) Applicant: Alonso Serna, Marcos, 48960 Galdakao (Vizcaya) (ES)
(72) Inventor: Alonso Serna, Marcos, 48960 Galdakao (Vizcaya) (ES)
(74) Representative: Rebate Conde, Maria Fernanda
(86) International application number: PCT/ES2016/070200
(87) International publication number: WO 2016/174287

(57) **Abstract**

Disclosed is a device for transporting bicycles or similar, characterised in that it comprises: first parts (1), which serve as a base on the bars on which the roof rack or luggage carrier is installed; a first fixed support (2) located adjacent to said parts (1), the upper part of said first fixed support being connected to a disc made of Teflon (3) or a material with equivalent mechanical properties, which disc is connected to a rotary second support (4); a rotary assembly (11) essentially formed by respective movable shafts, a lower one (5) and an upper one (6), which is connected to said elements; and a loading assembly (10) formed by a fixed carriage (8) that comprises a plurality of rollers (7) that are connected to a movable carriage (9) that supports the load.

## Description

### Object of the invention

The object of the present specification is a device for transporting bicycles or similar, with the special feature that said device enables the extraction thereof from any of the four sides of the vehicle where it is inserted, thus facilitating the loading and/or unloading the element to be transported.

### Background of the invention

Today, the luggage carrier or roof rack is known as a device or system that is preferably embodied by a series of transverse or longitudinal bars that tend to be installed on the roof of a vehicle, preparing said space for the loading of elements, such as suitcases or packages, and even bicycles, ladders, etc.

There are a number of designs or variations of these systems prepared to transport luggage or packages that do not fit inside the cabin of the vehicle itself. An example of this is the utility model ES 1 081 805U, which describes a luggage carrier made of phenolic plywood, or any other favourable material characterised by: its fastening mode, which is easy to assemble and disassemble by means of U-bolts and nuts, mounted on the rails of the vehicle that has them, or on the cross beams or "roof racks" available on the market or, if applicable, using the fastening modes provided by the different vehicle models.

Said luggage carriers have the main drawback of being designed to be preferably loaded from one of the sides thereof, where said side is prepared for this purpose, which makes it difficult to load and unload the luggage carrier or roof rack.

### Description of the invention

The technical problem that the present invention resolves is to achieve an element or device for loading and/or transporting bicycles or elements that cannot be transported inside a vehicle. To do so, the device for transporting bicycles or similar is characterised in that it comprises first parts which serve as a base on the bars on which the roof rack or luggage carrier is installed, and a first fixed support located adjacent to said parts, the upper part of said first fixed support being connected to a disc made of Teflon or similar, which disc is connected to a rotary second support. On the one hand, a rotary assembly essentially formed by respective movable shafts, a lower one and an upper one, is connected to said elements; and, on the other hand, a loading assembly formed by a fixed carriage that comprises a plurality of rollers that are connected to a movable carriage that supports the load.

Due to its design, the device recommended herein enables the extraction and loading thereof from any of the four sides of the vehicle where it has been installed, which significantly increases the ease of loading and/or unloading the element to be transported on the vehicle, whether it is a bicycle or any portable element, by means of the adaptation of the same.

Throughout the description and the claims, the word "comprises" and its variants are not intended to exclude other technical characteristics, additives, components or steps. For those skilled in the art, other objects, advantages and characteristics of the invention may be deduced from both the description and the practical use of the invention. The following examples and drawings are provided by way of illustration, and are not meant to restrict the present invention. Furthermore, the present invention covers all of the possible combinations of particular and preferred embodiments indicated herein.

### Brief description of the drawings

What follows is a very brief description of a series of drawings that aid in better understanding the invention, and which are expressly related to an embodiment of said invention that is presented by way of a non-limiting example of the same.

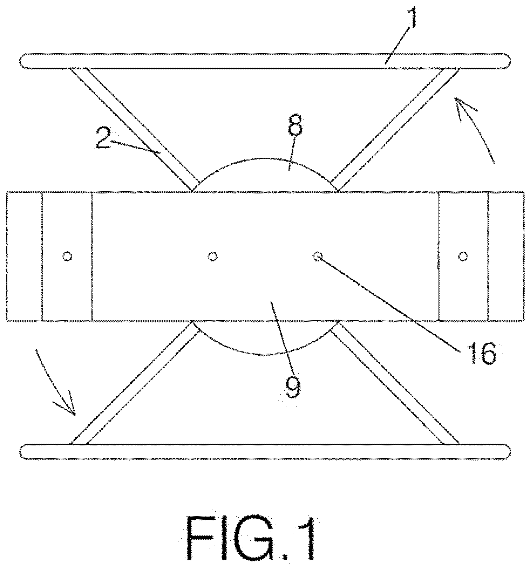

- Fig. 1: shows a top view of the device for transporting bicycles or similar, object of the present invention.

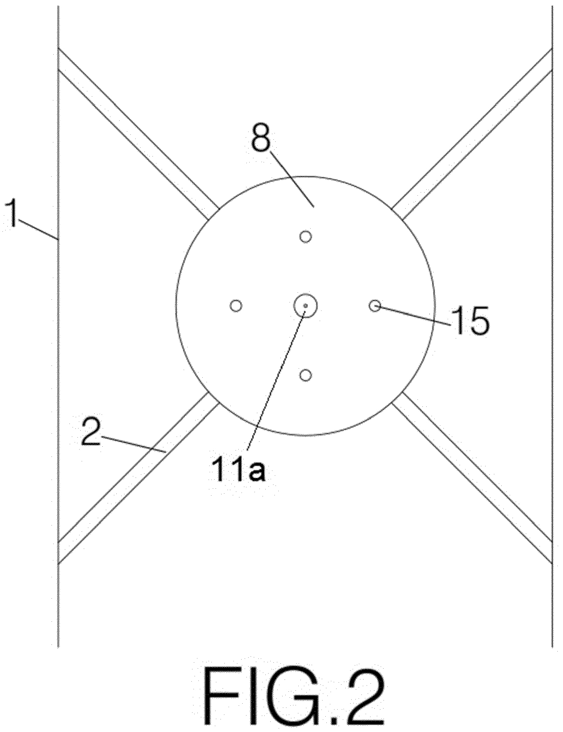

- Fig. 2: shows a top view of the device without the presence of the second support (4).

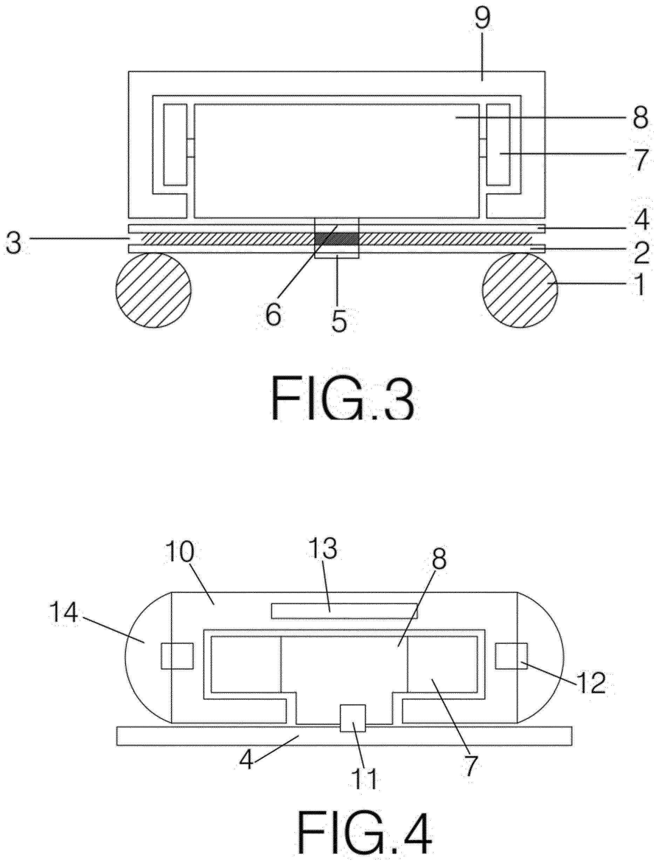

- Fig. 3: shows a cross-sectional view of a first practical embodiment of the device recommended herein.
- Fig. 4: shows a cross-sectional view of a second practical embodiment of the device presented herein.
- Fig. 5: shows a view of the top portion of the device, in the loaded position thereof.

### Preferred embodiment of the invention

The attached figures show a preferred embodiment of the invention. More specifically, the device for transporting bicycles or similar, object of the present specification, is characterised in that it comprises first parts (1), which serve as a base on the bars on which the roof rack is installed, and a first fixed support (2) located adjacent to said parts (1), the upper part of said first fixed support being connected to a disc made of Teflon (3) or a material with equivalent mechanical properties, which disc is connected to a rotary second support (4).

And wherein, a rotary assembly (11) essentially formed by respective movable shafts, a lower one (5) and an upper one (6), is integrally connected to said elements.

Said rotary assembly (11) incorporates at least one upper lug (11a) that prevents the rotation of the assembly from exceeding 180°, thus increasing the stability of the load.

All of this joined to a loading assembly (10) formed by a fixed carriage (8) comprising a plurality of rollers (7) that are connected to a movable carriage (9) that supports the load. And wherein said assembly (10) is that which enables, due to the 180° movement thereof, the device recommended herein to be loaded from the four sides of the vehicle.

In a preferred embodiment, the fixed carriage (8) incorporates a series of fastening lugs (15), which are associated with openings (16) in the movable carriage (9), such that when they are fitted together they prevent the movement of the movable carriage (9), especially during the transportation of the load.

This fastening method is activated by means of an unlocking lever (13) that releases the lugs (15) from the openings (16), thus enabling the free movement of the movable carriage (9).

In a particular embodiment, the movable carriage (9) may incorporate several adapters or adaptable connections (17) that adjust their shape to the different elements to be transported, such that the load is securely transported, universalising the use thereof to any type of element to be transported.

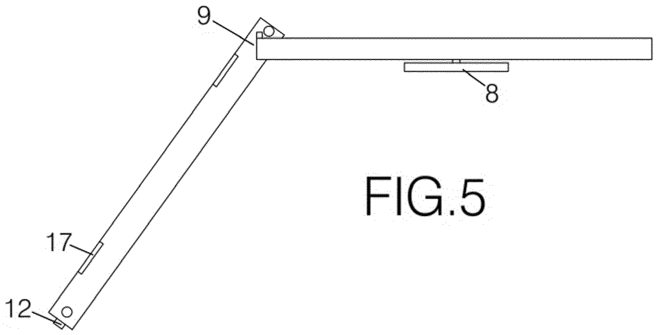

In a practical embodiment, the movable carriage (9) is articulated, forming two bodies as shown in Figure 5.

In a particular embodiment, the device has decorative side handholds (14) in order to grasp the aforementioned device more conveniently.

## Claims

1. A device for transporting bicycles or similar, **characterised in that** it comprises: first parts (1), which serve as a base on the bars on which the roof rack or luggage carrier is installed; a first fixed support (2) located adjacent to said parts (1), the upper part of said first fixed support being connected to a disc made of Teflon (3) or a material with equivalent mechanical properties, which disc is connected to a rotary second support (4); a rotary assembly (11) essentially formed by respective movable shafts, a lower one (5) and an upper one (6), which is connected to said elements; and a loading assembly (10) formed by a fixed carriage (8) that comprises a plurality of rollers (7) that are connected to a movable carriage (9) that supports the load.

2. The device according to claim 1, wherein the fixed carriage (8) incorporates a series of fastening lugs (15), which are associated with openings (16) in the movable carriage (9) that prevent the movement of the movable carriage (9) during the transportation of the load.

3. The device according to any of claims 1 and 2 wherein the lugs (13) are associated to an unlocking lever (13) that releases them from the openings (16), thus enabling the movement of the movable carriage (9).

4. The device according to any of claims 1 - 3, wherein the movable carriage (9) incorporates at least one adapter or adaptable connection (17) that adjusts its shape to the different elements to be transported.

5. The device according to any of claims 1 - 4, wherein the movable carriage (9) is formed by two articulated bodies.

6. The device according to claim 1, wherein the rotary assembly (11) incorporates at least one upper lug (11a) that prevents the rotation of the assembly from exceeding 180°.

7. The device according to any of the preceding claims, wherein it incorporates decorative side handholds (14).
